(19) Europäisches Patentamt
European Patent Office
Office européen des brevets

(11) **EP 1 700 265 B1**

(12) **EUROPEAN PATENT SPECIFICATION**

(45) Date of publication and mention
of the grant of the patent:
**21.11.2007 Bulletin 2007/47**

(51) Int Cl.:
***G06T 1/00*** (2006.01)

(21) Application number: **04801477.3**

(86) International application number:
**PCT/IB2004/052682**

(22) Date of filing: **07.12.2004**

(87) International publication number:
**WO 2005/064535 (14.07.2005 Gazette 2005/28)**

(54) **ESTIMATION OF QUANTISATION STEP SIZES FOR A WATERMARK DETECTOR**

SCHÄTZUNG VON QUANTISIERUNGS-SCHRITTGRÖSSEN FÜR EINEN WASSERZEICHEN-DETEKTOR

ESTIMATION DES LONGUEURS D' ETAPE DE QUANTIFICATION POUR DETECTEUR DE FILIGRANE

(84) Designated Contracting States:
**AT BE BG CH CY CZ DE DK EE ES FI FR GB GR HU IE IS IT LI LT LU MC NL PL PT RO SE SI SK TR**

(30) Priority: **22.12.2003 EP 03104924**

(43) Date of publication of application:
**13.09.2006 Bulletin 2006/37**

(73) Proprietor: **Koninklijke Philips Electronics N.V.
5621 BA Eindhoven (NL)**

(72) Inventor: **KALKER, Antonius, A., C., M.
NL-5656 AA Eindhoven (NL)**

(74) Representative: **Schmitz, Herman Jan Renier
Philips
Intellectual Property & Standards
P.O. Box 220
5600 AE Eindhoven (NL)**

(56) References cited:
**WO-A-03/052689**

• **EGGERS J J ET AL: "Estimation of amplitude modifications before SCS watermark detection" PROCEEDINGS OF THE SPIE - THE INTERNATIONAL SOCIETY FOR OPTICAL ENGINEERING SPIE-INT. SOC. OPT. ENG USA, vol. 4675, 24 January 2002 (2002-01-24), pages 387-398, XP002318106 ISSN: 0277-786X**

**Description**

TECHNICAL FIELD

The present invention generally relates to the field of watermarked media signals and the detection of watermarks embedded in media signals. More particularly the present invention is directed towards a method, apparatus and computer program product for enabling at least identification of data symbols that have been embedded in a media signal by quantization of a host signal.

DESCRIPTION OF RELATED ART

It is well known to watermark media signals in order to protect the rights of content owners against piracy and fraud.

Two such watermarking schemes are the so-called QIM (Quantisation Index Modulation) and DC-QIM (distortion-compensated Quantisation Index Modulation) watermarking schemes, where a watermark is embedded in a so-called host signal by choosing sample values on a sampling grid. In order to get a better statistical resemblance to the original signal after watermarking, it is then common to add dither to the watermarked signal.

However, when such a watermarked host signal is transmitted to a receiver, the scaling factors used can get rescaled, which scaling factor is proportional to the quantisation step size. Since the quantisation step size is then incorrect the detection of a watermark is hard or even impossible to perform. Such rescaling of the scaling factors can take place because of various reasons, such as the properties of the transmission channel used. One reason can be that the channel is an analogue channel with an unknown gain factor. Another reason can be an attack on the signal by a malicious party.

WO 03/052689 describes one way to retrieve scaling factors from a received possibly rescaled host signal. In this document received signal samples are divided into three different dither value intervals. Histograms are then created using partial probability density functions for the signal samples in each interval, and the original scaling factor as well as a DC offset can be obtained through analysing these three histograms. Signal samples are thus provided together in groups with many varied dither values before analysis, which means that some information in the signal samples might not be used for determining the scaling factors. This document also mentions that a pilot signal is used in the retrieval of the scaling factors.

It would however be advantageous to have an alternative way of determining scaling factors of a received media signal that can use more information in the different signal samples for the determination of this scaling factor.

SUMMARY OF THE INVENTION

It is therefore an object of the present invention to provide an alternative way of determining scaling factors of a received media signal that uses more information in received signal samples than what is done within the prior art.

According to a first aspect of the present invention, this object is achieved by a method of enabling at least identification the presence data symbols that have been embedded in a media signal comprising the steps of:

obtaining a transmitted media signal, which comprises a possibly distorted version of a host signal in which data symbols have been embedded by quantisation using a certain quantisation step size and to which dither with a set of dither values has been added,

providing several dither value intervals within the set, where each interval corresponds to one or a small number of dither values,

determining a histogram for each dither value interval, where a histogram is determined for all sample values of a set of signal samples of the transmitted media signal and having a dither value in the corresponding dither value interval,

combining the separate histograms corresponding to the intervals into a single histogram, and

determining at least a rescaling factor based on the combined histogram in order to estimate the quantisation step size.

According to a second aspect of the present invention, this object is also achieved by an apparatus for enabling at least identification the presence of data symbols that have been embedded in a media signal and comprising:

a signal obtaining unit arranged to obtain a transmitted media signal comprising a possibly distorted version of a host signal in which data symbols have been embedded by quantisation using a certain quantisation step size and to which dither with a set of dither values has been added, and

a signal distortion determining unit arranged to:

provide several dither value intervals within the set, where each interval corresponds to one or a small number of dither values,

determine a histogram for each dither value interval, where a histogram is determined for all sample values of a set of signal samples of the transmitted media signal having a dither value in the corresponding dither value interval,

combine the separate histograms corresponding to the interval into a single histogram, and

determine at least a rescaling factor based on the combined histogram in order to estimate the quantisation step size.

According to a third aspect of the present invention, this object is also achieved by a computer program product for enabling at least identification the presence data symbols that have been embedded in a media signal, comprising a computer readable medium having thereon:

computer program code means, to make the computer do, when said program is loaded in the computer:

for an obtained transmitted media signal comprising a possibly distorted version of a host signal in which data symbols have been embedded by quantisation using a certain quantisation step size and to which dither with a set of dither values has been added,

provide several dither value intervals within the set, where each interval corresponds to one or a small number of dither values,

determine a histogram for each dither value interval, where a histogram is determined for all sample values of a set of signal samples of the transmitted media signal having a dither value in the corresponding dither value interval,

combine the separate histograms corresponding to the interval into a single histogram,

and

determine at least a rescaling factor based on the combined histogram in order to estimate the quantisation step size.

Claims 2 and 6 are directed towards also estimating an offset of the transmitted media signal.

Claims 3 and 7 are directed towards rescaling the transmitted media signal using the rescaling factor.

Claim 4 and 8 are directed towards processing the rescaled signal in order to detect or extract the embedded data.

The present invention has the advantage of using all the information in the histograms for the different signal sample values for estimating the quantisation step size. Because of the large number of histograms it is furthermore easy to find the periodicity between the histograms, which enables a robust determination of quantisation step size. The invention is furthermore not dependent on receiving a pilot signal in order to estimate the quantisation step size.

The essential idea of the invention is that the detector of embedded information exploits optimally the knowledge it has on dither values corresponding to sample positions. In particular it uses its knowledge on which sample positions have the same dither value. For all sample positions corresponding to a certain dither value, a (sparse) histogram is constructed. These sparse histograms are then combined into a single well-behaved histogram from which the relevant scaling parameters can be derived.

These and other aspects of the invention will be apparent from and elucidated with reference to the embodiments described hereinafter.

BRIEF DESCRIPTION OF THE DRAWINGS

The present invention will now be explained in more detail in relation to the enclosed drawings, where

Fig 1 shows a block schematic of an apparatus according to the present invention,

Fig 2 shows a flow chart of a method according to the present invention,

Fig. 3 shows histograms of a received image signal, which histograms have been calculated with the method according to the present invention,

Fig. 4 shows a curve over a Fourier transform of the histograms in Fig. 3,

Fig. 5 shows a curve over the phase relationship of the transformed histograms in Fig. 4, and

Fig. 6 shows a computer program product comprising computer program code for performing the method according to the invention.

DETAILED DESCRIPTION OF EMBODIMENTS

The invention is directed towards estimating original scaling factors of a received watermarked signal in order to be able to detect or extract a watermark from a received host signal. In order to better understand the invention, some basic concepts about QIM (Quantisation Index Modulation) and DC-QIM (distortion compensated Quantisation Index Modulation) will now be explained.

A watermark is according to QIM embedded in a host signal through choosing quantisation values on a sampling grid. A watermarking formula for this approach can be seen as:

$$q = (ROUND(s/D - d - b/N) + d + b/N)*D \qquad (1)$$

where q is the watermarked signal, s is the original signal, D is the quantisation step size, d is a dither value in an interval $0 <= d < 1$, b is the watermark information and N the number of information symbols in the watermark signal. In many practical applications N is equal to two, which indicates a so-called binary alphabet.

The dither is here provided with a wide range of values, which in one embodiment of the present invention is 128 different values between 0 and 1. The dither value is a pseudo-random variable that is fixed, independent of the information symbol. The dither will later be used in order to determine scaling factors, which will be described later. The reason dither is provided in the watermarked signal is that the watermarked signal q will be virtually indistinguishable from the original signal s, which can be determined by studying histograms of the watermarked and original signals.

Above a QIM watermarking process was described. A variation of this is the DC-QIM method where the basic quantisation approach is upgraded with a distortion compensating component.

A watermarking formula according to this process would then look like:

$$qdc = s + a*(ROUND(s/D-d-b/N) + d + b/N - s/D)*D, \qquad (2)$$

where a is a properly chosen factor between 0 and 1.

More details about these watermarking schemes can be found in WO 03/052689 and in the article "Quantization Index Modulation: A Class of Provably Good Methods for Digital Watermarking and Information Embedding" by B. Chen and G.W. Wornell, IEEE Transactions on Information Theory, Vol. 47, No. 4, May 2001.

When a watermarked signal according to any of these two schemes is then transmitted to a watermark detector over a channel, it is fairly easy to detect the embedded message b in a received signal r, which can be performed according to

$$b' = Mod(ROUND(rN/D - Nd), N) \qquad (3)$$

i.e. through dividing the value r by D/N, subtracting the rescaled dither Nd, rounding the result and performing a Modulo N operation on the rounded value.

Here it is assumed that the received signal r corresponds to the watermarked signal q with some added noise n.

In reality there is not only added noise, but there can be a rescaling of the original signal. This rescaling can be the result of properties of the transmission channel used, which can take place if it is a analogue channel. Such rescaling can also be the result of an attack on the watermarked signal by a malicious party. The invention is directed towards identifying the rescaling factor of a received signal and then it is a simple task to scale the signal in order to estimate the original scaling and thereafter identify or extract a watermark from the restored signal.

A model for the relationship of the changed signal and the original signal can then be set as:

$$r = R*(s + O) + n \qquad (4)$$

Where R is a multiplicative degradation and O represents an offset in DC values. Through the equation:

$$r' = r/R - O \qquad (5)$$

a new signal r' can be determined from which an embedded watermark must be retrieved.

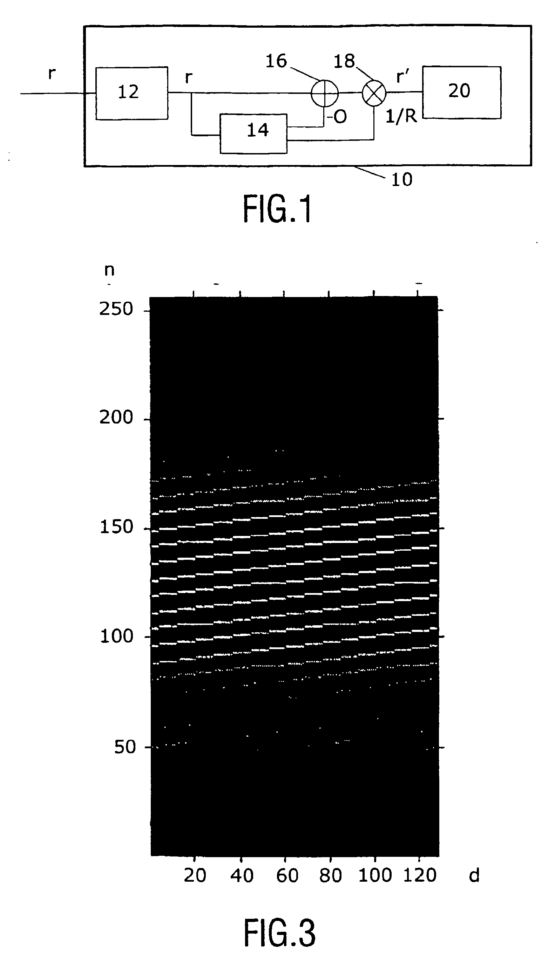

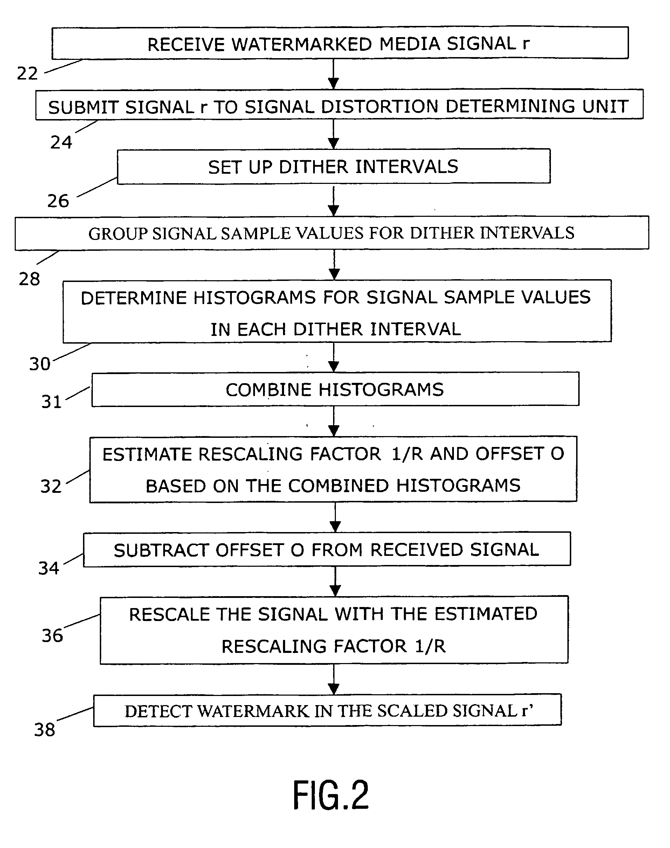

In order to describe the present invention reference will now be made to Fig. 1, which shows an apparatus for enabling identification of data signals and to Fig. 2, which shows a flow chart for enabling identification of data signals. The apparatus 10 comprises a receiving unit 12, which receives a watermarked media signal r over a channel (not shown), step 22. The channel can here be an analogue channel in which case the receiving unit can include radio circuits. The received signal r is then delivered to a signal distortion determining unit 14, step 24. In the signal distortion determining unit 14, which is the core element of the invention, there are then performed a number of further steps, which will be described next.

Under the assumption that the received signal r is made up of a number of samples that can have values in a value range and also under the assumption that the dither intervals are known at the watermark detector side, the signal distortion determining unit 14 now first sets up a large number of dither intervals, like 128 different intervals that the dither can take up, step 26. Thereafter the signal sample values of the received signal are grouped according to dither interval, that is all signal sample values having dither within a dither interval are grouped together. Each dither value interval is here based on only one dither value. In this way a number of different sample groups are provided for each dither interval, step 28. A histogram is then determined for all the signal samples of each dither interval, step 30, such that a histogram is determined or computed for each dither interval. These histograms are then combined into a single histogram, step 31. Thereafter the rescaling factor 1/R as well as offset O are estimated based on this combined histogram, step 32. How this can be done will shortly be described in more detail. At this point it suffices to say that the (typically sparse) separate histograms are combined into a single (better behaved) histogram and that the relevant parameters are derived therefrom. The determined offset -O is then provided from the signal distortion determining unit 14 to an adding unit 16, which also receives the signal r. The adding unit 16 then adds the offset -O to the signal r and thus subtracts the offset O from the received signal, step 34, and provides the thus adjusted received signal to a multiplying unit 18. After the rescaling factor 1/R has been estimated by the signal distortion determining unit 14, this factor is also forwarded to the multiplying unit 18. The rescaling factor 1/R is then multiplied with the adjusted received signal in order to scale the signal, step 36, in order to retrieve the original level or original quantisation step size of the watermarked signal. The thus rescaled signal r' is then supplied to a watermark detector 20, where watermark detection is performed, step 38.

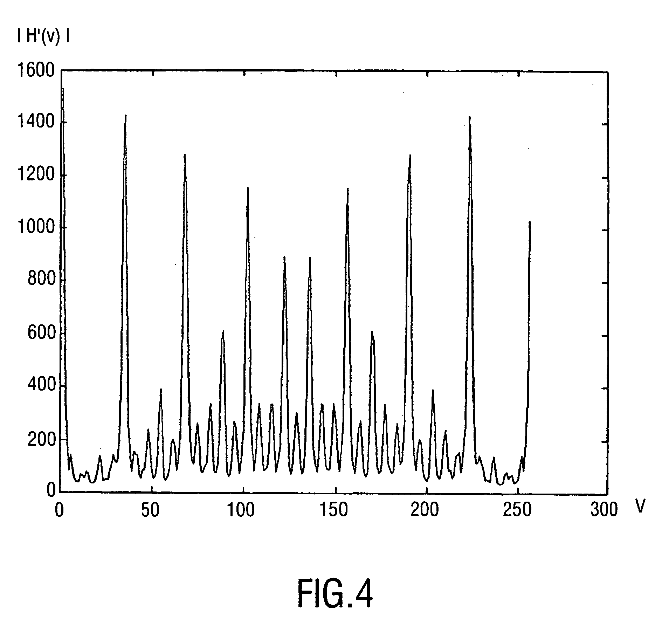

How the scale factors can be determined will now be described in relation to Fig. 3, which shows a matrix of a number of histograms made according to the principles of the invention for an image having 256 signal levels and 128 dither value intervals with D set to 16 and N set to 2. The histograms thus occupy a column each. As can be seen the combined histograms together provide a number of lines that go from left to right and where these lines are slightly angled upwards. The angle is due to the fact that the dither raises the level of the signal. Each histogram thus contributes to these lines. By studying the angle by which a line is raised, it is possible to determine the scale factor of the received signal and from that rescale the signal. In the figure a Hanning window has been applied in the vertical direction, which explains the darkening at the top and bottom of the matrix. From index equal to I to index equal to 128 there is phase shift of ND = 2D. From this figure it can be seen that the multiplicative degradation is about 0,95. For each dither interval there is furthermore a clear periodicity.

Mathematically the histogram matrix of Fig. 10 can be described as:

$$h(k,n) = h(n/R - (k/K + O)D) \qquad (6)$$

Where h(k,n) is the frequency of sample n for dither interval k, K is the number of dither intervals, O is the offset and R the rescaling factor. As each column in the matrix is a shifted version of any other column and as the periodicity of the signal is most easily retrieved in the frequency domain a FFT (Fast Fourier Transform) is applied along the vertical axis n, but before that a window function w(n) is applied in order to reduce wrap around effects.

The application of a window function leads to the following equation:

$$h'(k,n) = w(n)*h(k,n) \qquad (7)$$

where w(n) is assumed to be sufficiently fast decaying to approximately have h'(k+m,n) = h'(k,n - m*D/k), i.e. shift variance after windowing. Then the vertical Fourier transform is applied according to:

$$H'(k,v) = Sum\_n\ h'(k,n)\ exp(-2*\pi*j*n*v/M) \qquad (8)$$

$$= exp(-2*\pi*j*(k/K + O)*D*R*v/M)H'(v)$$

where the size of the set of signal values is M. For each column in Fig. 3, it can therefore be seen that the Fourier transform differs only in phase and not in amplitude. An estimation of |H'(v)| of the combined histogram h(n) (lying all separate histograms on top of each other) can be obtained by averaging |H'(k,v)| over the variable k according to:

$$\left|H'(v)\right| \approx (Sum\_k\ \left|H'(k,v)\right|)/K \qquad (9)$$

This is outlined in Fig. 4, which shows |H'(v)| plotted against v. From this figure it can be seen that |H'(v)| has strong peaks, corresponding to the periodic behaviour of the original histograms, where the distance between the peaks has a period of RD. The first strong peak in the figure corresponds to the fundamental period RD, which in the frequency domain is the fundamental frequency M*N/(R*D). In the figure this frequency is estimated as 33, from which a factor R = 0.96 can be determined.

This fundamental frequency can also be used for determining the offset O, since the phase behaviour of this fundamental frequency (as a function of k) is given by:

$$Phase(k)/(2*\pi) = -(k/K + O)*N \qquad (10)$$

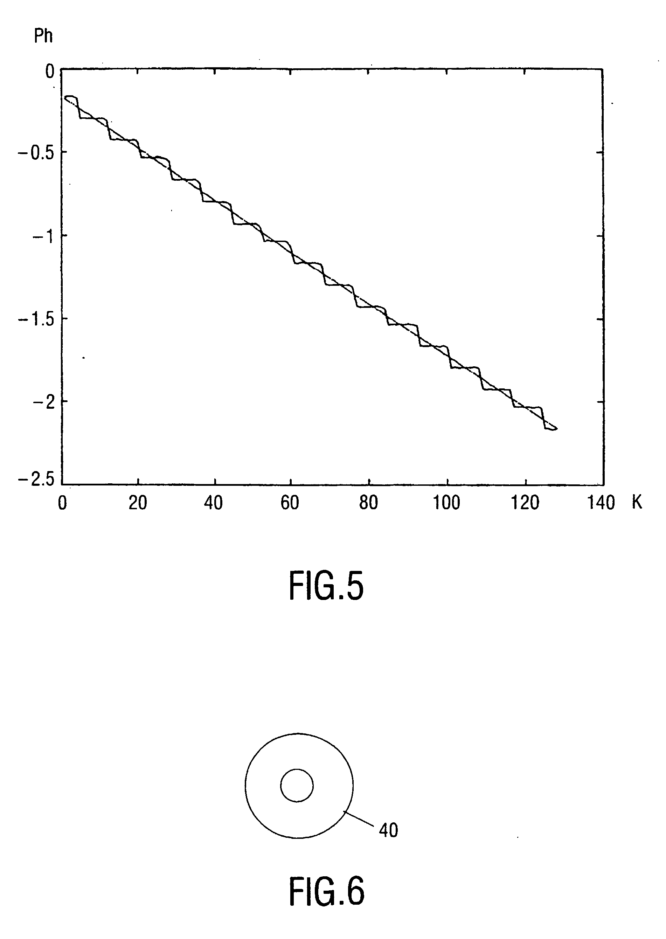

In Fig. 5 this phase relationship is plotted as well as the best linear approximation (straight line). It can clearly be seen that from minimal to maximal dither index two full cycles are covered. The offset value is estimated at 0.17*D.

The different units in the apparatus can be provided in either software or hardware. In the case of software, the signal distortion determining unit possibly together with the adding and multiplying units can be provided in the form of one or more processors together with corresponding program memory for containing the program code for performing the method according to the invention. The program code can also be provided on a computer program product, of which one is shown in Fig. 6 in the form of a CD ROM disc 40. This is just an example and various other types of computer program products are just as well feasible. The program code can furthermore be downloaded from a server, perhaps via the Internet.

With the present invention there are several advantages obtained. All the information in the histograms for the different signal sample values is used for estimating the quantisation step size. Because of the large number of histograms it is furthermore easy to find the periodicity between the histograms, which enables a robust determination of quantisation step size as well as offset. The invention is furthermore not dependent on receiving a pilot signal in order to estimate the quantisation step size. Moreover, the method is also easily extended to situations where the scaling factor is not constant over the range of sample values.

There are several variations that can be made to the present invention. The media signal need not be received in the apparatus. Instead the apparatus can fetch the signal from a memory. The apparatus need furthermore not include the watermark detector. This detection can be performed in another apparatus. The number of dither values used can also be varied and is in no way limited to 128. Therefore the present invention is only to be limited by the following claims.

## Claims

1. Method of enabling at least identification of the presence of data symbols that have been embedded in a media comprising the steps of:

   obtaining a transmitted media signal (r), (step 22), which comprises a possibly distorted version of a host signal in which data symbols have been embedded by quantisation using a certain quantisation step size and to which dither with a set of dither values has been added,
providing several dither value intervals within the set, where each interval corresponds to one or a small number of dither values, (step 26),
determining a histogram for each dither value interval, where a histogram is determined for all sample values of a set of signal samples of the transmitted media signal (r) and having a dither value in the corresponding dither value interval, (step 30),
combining the separate histograms corresponding to the intervals into a single histogram, (step 31), and
determining at least a rescaling factor (1/R) based on the combined histogram, (step 32), in order to estimate the quantisation step size.

2. Method according to claim 1, further comprising the steps of estimating an offset (O) of the transmitted media signal, (step 32), and removing the estimated offset from the signal, (step 34).

3. Method according to claim 1, further comprising the step of rescaling the signal using the rescaling factor (1/R) in order to at least approximately restore the original media signal having embedded data, (step 36).

4. Method according to claim 3, further comprising the step of processing the rescaled signal (r') in order to detect or extract the embedded data, (step 38).

5. Apparatus (10) for enabling at least identification of the presence of data symbols that have been embedded in a media signal and comprising:

   a signal obtaining unit (12) arranged to obtain a transmitted media signal (r) comprising a possibly distorted version of a host signal in which data symbols have been embedded by quantisation using a certain quantisation step size and to which dither with a set of dither values has been added, and
   a signal distortion determining unit (14) arranged to:

   provide several dither value intervals within the set, where each interval corresponds to one or a small number of dither values,
   determine a histogram for each dither value interval, where a histogram is determined for all sample values of a set of signal samples of the transmitted media signal having a dither value in the corresponding dither value interval,
   combine the separate histograms corresponding to the intervals into a single histogram, and
   determine at least a rescaling factor (1/R) based on the combined histogram in order to estimate the quantisation step size.

6. Apparatus according to claim 5, wherein the signal distortion determining unit is further arranged to estimate an offset (O) of the transmitted media signal and further comprising a unit (16) arranged to remove the estimated offset from the signal.

7. Apparatus according to claim 5, further comprising a multiplying unit (18) arranged to multiply the rescaling factor (1/R) with the transmitted media signal in order to at least approximately restore the original media signal having embedded data.

8. Apparatus according to claim 7, further comprising a watermark detecting unit (20) arranged to process the rescaled signal (r') in order to detect or extract the embedded data.

9. Computer program product (40) for enabling at least identification of the presence of data symbols that have been embedded in a media signal, comprising a computer readable medium having thereon:

   computer program code means, to make the computer do, when said program is loaded in the computer:

   for an obtained transmitted media signal comprising a possibly distorted version of a host signal in which data symbols have been embedded by quantisation using a certain quantisation step size and to which dither with a set of dither values has been added,
   provide several dither value intervals within the set, where each interval corresponds to one or a small number of dither values,
   determine a histogram for each dither value interval, where a histogram is determined for all sample values of a set of signal samples of the transmitted media signal having a dither value in the corresponding dither value interval,
combine the separate histograms corresponding to the intervals into a single histogram, and
determine at least a rescaling factor based on the combined histogram in order to estimate the quantisation step size.

**Patentansprüche**

1. Verfahren zum Ermöglichen wenigstens einer Identifikation des Vorhandenseins von Datensymbolen, die in ein Medium eingebettet sind, wobei dieses Verfahren die nachfolgenden Verfahrensschritte umfasst:

   - das Erhalten eines übertragenen Mediasignals (r), (Schritt 22), das eine möglicherweise gestörte Version eines Gastgebersignals aufweist, in das Datensymbole eingebettet worden sind durch Quantisierung unter Anwendung einer bestimmten Quantisierungsschrittgröße und zu dem Schwankung mit einem Satz Schwankungswerte hinzugefügt worden ist,
   - das Schaffen verschiedener Schwankungswertintervalle innerhalb des Satzes, wobei jedes Intervall einem oder einer geringen Anzahl Schwankungswerte entspricht (Schritt 26),
   - das Ermitteln eines Histogramms für jedes Schwankungswertintervall, wobei ein Histogramm für alle Abtastwerte eines Satzes von Signalabtastwerten des übertragenen Mediasignals (r) ermittelt wird und mit einem Schwankungswert in dem entsprechenden Schwankungswertintervall, (Schritt 30),
   - das Kombinieren der einzelnen Histogramme entsprechend den Intervallen zu einem einzigen Histogramm, (Schritt 31), und
   - das Ermitteln wenigstens eines Neuskalierungsfaktors (I/R) auf Basis des kombinierten Histogramms, (Schritt 32), damit die Quantisierungsschrittgröße geschätzt werden kann.

2. Verfahren nach Anspruch 1, wobei dieses Verfahren weiterhin die nachfolgenden Verfahrensschritte umfasst:

   - das Schätzen eines Offsets (O) des übertragenen Mediasignals, (Schritt 32)), und
   - das Entfernen des geschätzten Offsets aus dem Signal, (Schritt 34).

3. Verfahren nach Anspruch 1, das weiterhin den Verfahrensschritt der Neuskalierung des Signals umfasst, und zwar unter Anwendung des Neuskalierungsfaktors (I/R) um wenigsten nahezu das ursprüngliche Mediasignal mit eingebetteten Daten wiederherzustellen, (Schritt (36).

4. Verfahren nach Anspruch 3, das weiterhin der Verfahrensschritt der Verarbeitung des neu skalierten Signals (r') umfasst, und zwar zum Detektieren oder Extrahieren der eingebetteten Daten, (Schritt 38).

5. Anordnung (10) zum Ermöglichen wenigstens der Identifikation des Vorhandenseins von Datensymbolen, die in ein Mediasignal eingebettet worden sind, wobei diese Anordnung Folgendes umfasst:

   - eine Signalerhaltungseinheit (12), vorgesehen zum Erhalten eines übertragenen Mediasignals (r) mit einer möglicherweise gestörten Version eines Gastgebersignals, in das Datensymbole eingebettet worden sind durch Quantisierung unter Anwendung einer bestimmten Quantisierungsschrittgröße und zu dem Schwankung mit einem Satz Schwankungswerte hinzugefügt worden ist,
   - eine Signalverzerrungsermittlungseinheit (14), vorgesehen zum

     -- Schaffen verschiedener Schwankungswertintervalle innerhalb des Satzes, wobei jedes Intervall einem oder einer geringen Anzahl Schwankungswerte entspricht,
     -- Ermitteln eines Histogramms für jedes Schwankungswertintervall, wobei ein Histogramm für alle Abtastwerte eines Satzes von Signalabtastwerten des übertragenen Mediasignals ermittelt wird und mit einem Schwankungswert in dem entsprechenden Schwankungswertintervall,
     -- Kombinieren der einzelnen Histogramme entsprechend den Intervallen zu einem einzigen Histogramm, und
     -- Ermitteln wenigstens eines Neuskalierungsfaktors (I/R) auf Basis des kombinierten Histogramms, damit die Quantisierungsschrittgröße geschätzt werden kann.

6. Anordnung nach Anspruch 5, wobei die Signalverzerrungsermittlungseinheit weiterhin dazu vorgesehen ist zum

- Schätzen eines Offsets (O) des übertragenen Mediasignals, und weiterhin mit einer Einheit (16) vorgesehen zum
- Entfernen des geschätzten Offsets aus dem Signal.

**7.** Anordnung nach Anspruch 5, weiterhin mit einer Multipliziereinheit (18), vorgesehen zum Multiplizieren des Neuskalierungsfaktors (I/R) mit dem übertragenen Mediasignal um wenigstens das ursprüngliche Mediasignal mit eingebetteten Daten wiederherzustellen.

**8.** Anordnung nach Anspruch 7, weiterhin mit einer Wasserzeichendetektionseinheit (20), vorgesehen zum verarbeiten des neu skalierten Signals (r') um die eingebetteten Daten zu detektieren oder zu extrahieren.

**9.** Computerprogrammprodukt (40) zum Ermöglichen wenigstens eine Identifikation des Vorhandenseins von Datensymbolen, die in ein Mediasignal eingebettet worden sind, mit einem von einem Computer auslesbarem Medium, mit:

- Computerprogrammcodemitteln, damit der Computer Folgendes durchführt, wenn das genannte Programm in den Computer geladen worden ist, für ein erhaltenes, übertragenes Mediasignal mit einer möglicherweise verzerrten Version eines Gastgebersignals, in das Datensymbole eingebettet worden sind, und zwar durch Quantisierung unter Anwendung einer bestimmten Quantisierungsschrittgröße, und zu dem Schwankung mit einem Satz Schwankungswerte hinzugefügt worden ist:
- das Schaffen verschiedener Schwankungswertintervalle innerhalb des Satzes, wobei jedes Intervall einem oder einer geringen Anzahl Schwankungswerte entspricht,
- das Ermitteln eines Histogramms für jedes Schwankungswertintervall, wobei ein Histogramm für alle Abtastwerte eines Satzes von Signalabtastwerten des übertragenen Mediasignals ermittelt wird und mit einem Schwankungswert in dem entsprechenden Schwankungswertintervall,
- das Kombinieren der einzelnen Histogramme entsprechend den Intervallen zu einem einzigen Histogramm, und
- das Ermitteln wenigstens eines Neuskalierungsfaktors auf Basis des kombinierten Histogramms, damit die Quantisierungsschrittgröße geschätzt werden kann.

**Revendications**

**1.** Procédé pour permettre au moins l'identification de la présence de symboles de données ayant été intégrés à un signal multimédia, comprenant les étapes suivantes :

obtention d'un signal multimédia transmis (r) (étape 22) qui comprend une version éventuellement déformée d'un signal hôte dans lequel des symboles de données ont été intégrés par quantification en utilisant une certaine taille du pas de quantification et auquel une variation aléatoire a été ajoutée avec un ensemble de valeurs aléatoires,
définition de plusieurs intervalles de valeurs aléatoires dans l'ensemble, chaque intervalle correspondant à une ou à un petit nombre de valeurs aléatoires (étape 26),
détermination d'un histogramme, pour chaque intervalle de valeurs aléatoires, un histogramme étant déterminé pour toutes les valeurs échantillons d'un ensemble d'échantillons de signal du signal multimédia transmis (r) ayant une valeur aléatoire se situant dans l'intervalle de valeurs aléatoires correspondant (étape 30),
combinaison des histogrammes séparés correspondant aux intervalles en un seul histogramme (étape 31), et
détermination d'au moins un facteur de modification d'échelle (1/R) sur la base de l'histogramme combiné (étape 32), afin d'estimer la taille du pas de quantification.

**2.** Procédé selon la revendication 1, comprenant en outre les étapes d'estimation d'un décalage (O) du signal multimédia transmis (étape 32), et d'élimination du décalage estimé du signal (étape 34).

**3.** Procédé selon la revendication 1, comprenant en outre l'étape de modification d'échelle du signal en utilisant le facteur de modification d'échelle (1/R) afin de rétablir au moins approximativement le signal multimédia original contenant des données intégrées (étape 36).

**4.** Procédé selon la revendication 3, comprenant en outre l'étape de traitement du signal à échelle modifiée (r') afin de détecter ou d'extraire les données intégrées (étape 38).

**5.** Appareil (10) pour permettre au moins l'identification de la présence de symboles de données ayant été intégrés à un signal multimédia et comprenant :

une unité d'obtention de signal (12) conçue pour obtenir un signal multimédia transmis (r) comprenant une version éventuellement déformée d'un signal hôte dans lequel des symboles de données ont été intégrés par quantification en utilisant une certaine taille de pas de quantification et auquel une variation aléatoire a été ajoutée avec un ensemble de valeurs aléatoires, et
une unité de détermination de déformation de signal (14) conçue pour :

définir plusieurs intervalles de valeurs aléatoires dans l'ensemble, chaque intervalle correspondant à une ou à un petit nombre de valeurs aléatoires,
déterminer un histogramme pour chaque intervalle de valeurs aléatoires, un histogramme étant déterminé pour toutes les valeurs échantillons d'un ensemble d'échantillons de signal du signal multimédia transmis ayant une valeur aléatoire se situant dans l'intervalle de valeurs aléatoires correspondant,
combiner les histogrammes séparés correspondant aux intervalles en un seul histogramme, et
déterminer au moins un facteur de modification d'échelle (1/R) sur la base de l'histogramme combiné afin d'estimer la taille du pas de quantification.

6. Appareil selon la revendication 5, **caractérisé en ce que** l'unité de détermination de distorsion du signal est en outre conçue pour estimer un décalage (O) du signal multimédia transmis et comprenant en outre une unité (16) conçue pour éliminer le décalage estimé du signal.

7. Appareil selon la revendication 5, comprenant en outre une unité de multiplication (18) conçue pour multiplier le facteur de modification d'échelle (1/R) par le signal multimédia transmis afin de rétablir au moins approximativement le signal multimédia original contenant des données intégrées.

8. Appareil selon la revendication 7, comprenant en outre une unité de détection de filigrane (20) conçue pour traiter le signal à échelle modifiée (r') afin de détecter ou d'extraire les données intégrées.

9. Produit à base de programme informatique (40) pour permettre au moins l'identification de la présence de symboles de données qui ont été intégrés à un signal multimédia, comprenant un support lisible par ordinateur sur lequel est stocké :

un moyen à base de code de programme informatique pour faire en sorte que l'ordinateur, lorsque ledit programme est chargé dans l'ordinateur :

pour un signal multimédia transmis obtenu comprenant une version éventuellement déformée d'un signal hôte dans lequel des symboles de données ont été intégrés par quantification en utilisant une certaine taille de pas de quantification et auquel une variation aléatoire a été ajoutée avec un ensemble de valeurs aléatoires,
fournisse plusieurs intervalles de valeurs aléatoires dans l'ensemble, chaque intervalle correspondant à une ou à un petit nombre de valeurs aléatoires,
détermine un histogramme, pour chaque intervalle de valeurs aléatoires, un histogramme étant déterminé pour toutes les valeurs échantillons d'un ensemble d'échantillons de signal du signal multimédia transmis ayant une valeur aléatoire se situant dans l'intervalle de valeurs aléatoires correspondant,
combine les histogrammes séparés correspondant aux intervalles en un seul histogramme, et
détermine au moins un facteur de modification d'échelle sur la base de l'histogramme combiné afin d'estimer la taille du pas de quantification.

FIG.1

FIG.3

RECEIVE WATERMARKED MEDIA SIGNAL r

22

SUBMIT SIGNAL r TO SIGNAL DISTORTION DETERMINING UNIT

24

SET UP DITHER INTERVALS

26

GROUP SIGNAL SAMPLE VALUES FOR DITHER INTERVALS

28

DETERMINE HISTOGRAMS FOR SIGNAL SAMPLE VALUES IN EACH DITHER INTERVAL

30

COMBINE HISTOGRAMS

31

ESTIMATE RESCALING FACTOR 1/R AND OFFSET O BASED ON THE COMBINED HISTOGRAMS

32

SUBTRACT OFFSET O FROM RECEIVED SIGNAL

34

RESCALE THE SIGNAL WITH THE ESTIMATED RESCALING FACTOR 1/R

36

DETECT WATERMARK IN THE SCALED SIGNAL r'

38

FIG.2

FIG.4

FIG.5

FIG.6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03052689 A

**Non-patent literature cited in the description**

- **B. CHEN ; G.W. WORNELL.** Quantization Index Modulation: A Class of Provably Good Methods for Digital Watermarking and Information Embedding. *IEEE Transactions on Information Theory,* May 2001, vol. 47 (4